# EUROPEAN PATENT APPLICATION

(11) **EP 2 546 477 A1**
(43) Date of publication of application: **16.01.2013**
(21) Application number: 11753112.9
(22) Date of filing: 07.02.2011
(51) Int. Cl.: F01K 7/44, F01K 9/00, F22D 1/02, F22D 1/12

(54) **COAL-FIRED POWER PLANT, AND METHOD FOR OPERATING COAL-FIRED POWER PLANT**

(30) Priority: 12.03.2010 JP 2010055229
(71) Applicant: Hitachi, Ltd., Chiyoda-ku Tokyo 100-8280 (JP)
(72) Inventor: HAYASHI, Yoshiharu, Chiyoda-ko, Tokyo 100-8220 (JP)
(74) Representative: Beetz & Partner
(86) International application number: PCT/JP2011/052472
(87) International publication number: WO 2011/111450

(57) **Abstract**

A coal-fired power plant having a control unit including a first flow rate control valve for regulating a water flow rate of a water feed bypass system, a second flow rate control valve installed in an extraction pipe for extracting steam from a steam turbine, a first temperature sensor on a downstream side of a heat recovery device, and a second temperature sensor on a downstream side of a heat exchanger and the control unit regulates opening of the first and second flow rate control valves on the basis of an exhaust gas temperature detected by the first temperature sensor and a feed water temperature detected by the second temperature sensor.

Accordingly, even when a recovery heat quantity of the heat recovery device installed on a gas duct is changed due to deterioration with age of a boiler, a reduction in plant reliability and plant efficiency can be suppressed.

## Description

### {Technical Field}

The present invention relates to a coal-fired power plant and an operating method for the coal-fired power plant.

### {Background Art}

The patent literature 1 discloses a feed water heater in a combined cycle plant of an exhaust gas reheat system with a gas turbine power plant additionally installed in a steam turbine power plant. The combined cycle plant of the patent literature 1 installs a bypass path in a condensate supply system, feeds condensate to a heat recovery device (an exhaust gas cooler), thereby heats the condensate. And, the heat of exhaust gas recovered by the heat recovery device (the exhaust gas cooler) heats boiler feed water and improves the plant efficiency. Further, the patent literature 1 discloses a feed water regulating valve for regulating the water distribution rate to be fed to the feed water heater side and heat recovery device (the exhaust gas cooler) side.

### {Prior Art Literature}

### {Patent Literature}

{Patent Literature 1} Japanese Patent Application Laid-open No. Hei 6 (1994)-2806

### {Summary of Invention}

### {Technical Problem}

However, the invention disclosed in the patent literature 1 fails to disclose a method for regulating the heat quantity of exhaust gas recovered by the heat recovery device (the exhaust gas cooler) and the heating rate of boiler feed water. Therefore, in the invention disclosed in the patent literature 1, when the exhaust gas temperature and exhaust gas flow rate are changed due to a deterioration with age of the boiler, the temperature of exhaust gas discharged from the boiler and the temperature of water to be fed to the boiler cannot be controlled to predetermined temperatures.

Therefore, when the temperature of exhaust gas discharged from the boiler is shifted from the design value, there is a case that the dust collection efficiency of an electric dust collector on the downstream side may be reduced.

Further, in the boiler, a heat exchanger in which evaporation of water in the flow path is not supposed in design is installed. Therefore, when the temperature of water to be fed to the boiler is higher than the design value, the feed water is evaporated (steaming) by the heat exchanger of the boiler, which can cause the heat exchanger to be damaged. On the other hand, when the temperature of water to be fed to the boiler is lower than the design value, the total quantity of water fed to the boiler is not evaporated and some of it is discharged as drain.

As mentioned above, when the temperature of exhaust gas discharged from the boiler and the temperature of water to be fed to the boiler cannot be controlled to predetermined temperatures, a problem arises that the plant reliability and plant efficiency are reduced.

An object of the present invention is to suppress the reduction in the plant reliability and plant efficiency even if the exhaust gas temperature or exhaust gas flow rate is changed due to a deterioration with age of the boiler and the recovery heat quantity of the heat recovery device installed on a gas duct is changed.

### {Solution to Problem}

The present invention is characterized in that a control unit including a first flow rate control valve for regulating the water flow rate flowing in the water feed bypass system, a second flow rate control valve installed in an extraction pipe for extracting steam from the steam turbine, a first temperature sensor installed on a downstream side of the heat recovery device, and a second temperature sensor installed on a downstream side of the feed water heater is installed, wherein the control unit regulates the openings of the first and second flow rate control valves on the basis of an exhaust gas temperature detected by the first temperature sensor and a feed water temperature detected by the second temperature sensor.

### {Advantageous Effects of Invention}

According to the present invention, even if the exhaust gas temperature or exhaust gas flow rate is changed due to a deterioration with age of the boiler and the recovery heat quantity of the heat recovery device installed on the gas duct is changed, the reduction in the plant reliability and plant efficiency can be suppressed.

### {Brief Description of Drawings}

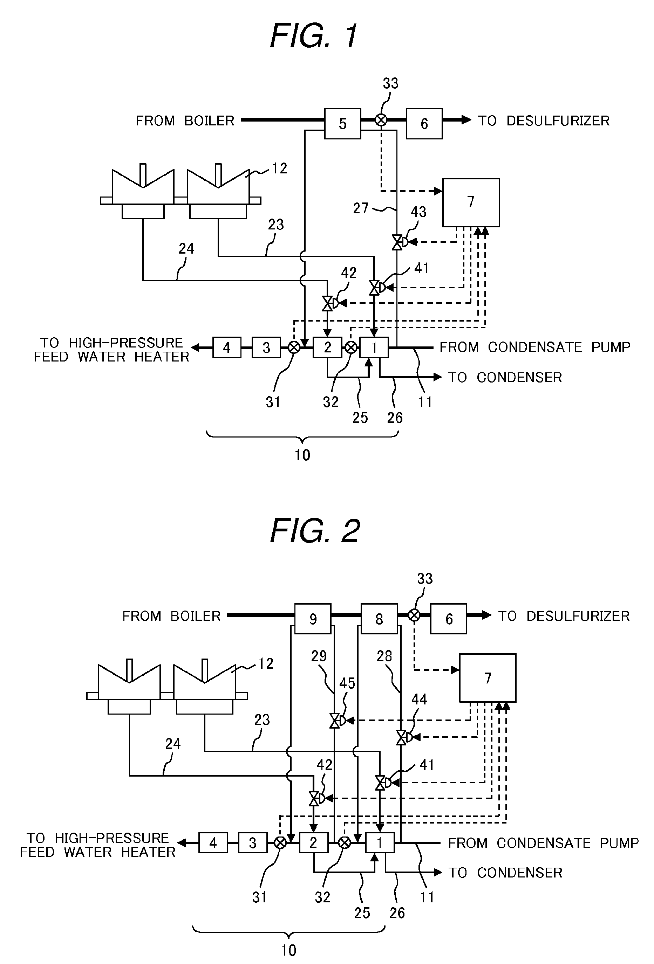

{Fig. 1} Fig. 1 is a schematic view showing the low-pressure feed water heater and the related devices among the constituent devices of the coal-fired power plant.

### (Embodiment 1)

{Fig. 2} Fig. 2 is a schematic view showing the low-pressure feed water heater and the related devices among the constituent devices of the coal-fired power plant.

### (Embodiment 2)

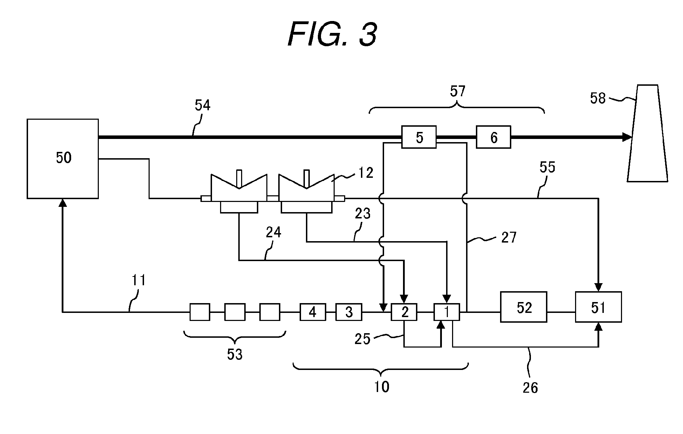

{Fig. 3} Fig. 3 is a system diagram of a coal-fired power plant.

### {Description of Embodiments}

Generally, to remove an environmental restriction substance included in exhaust gas discharged from a boiler until below the restriction value, a coal-fired power plant includes an exhaust gas treatment equipment. The exhaust gas treatment equipment includes denitrification equipment for removing nitrogen oxide, an electric dust collector for removing combustion ash, and a desulfurizer for removing sulfur oxide. Further, in addition to these eliminators, the exhaust gas treatment equipment is provided with heat exchangers for using the surplus heat of exhaust gas. One of the heat exchangers is an air preheater, which exchanges heat between air to be fed to the boiler and exhaust gas. Exhaust gas heat can be used to raise feed air in temperature, thereby improving the heat efficiency of the boiler. Another heat exchanger is a gas-gas heater (GGH), which exchanges heat between high-temperature gas flowing on the upstream side of the gas duct and low-temperature gas flowing on the downstream side of the gas duct. The GGH is a device for preventing a phenomenon that water vapor included in exhaust gas is discharged like white smoke from the chimney positioned at the exit of the gas duct. Discharging of water vapor itself is harmless. However, it causes visual uneasiness to neighbors, so that in Japan, it is a restriction object (called visual environmental pollution).

Further, the desulfurizer sprays a water solution of a limestone slurry on the gas duct with a sprayer to remove the sulfur oxide. Therefore, at the exit of the desulfurizer, the moisture concentration in exhaust gas is increased and the gas temperature is decreased. Therefore, if exhaust gas discharged from the desulfurizer is discharged into the atmosphere as it is, water vapor is condensed at the exit of the chimney into like white smoke. The GGH raises low-temperature exhaust gas on the downstream side of the desulfurizer to 100°C or higher by high-temperature exhaust gas on the upstream side of the gas duct, thereby suppressing the condensation of water vapor at the exit of the chimney to prevent white smoke.

The GGH uses water as a heat transfer medium and exchanges heat between the upstream side and the latterstream side of exhaust gas. Namely, a heat recovery device for recovering heat from high-temperature exhaust gas is installed on the upstream side of the gas duct, and the heat recovery device recovers heat from the high-temperature exhaust gas and raises water in temperature. Furthermore, on the latterstream side of the gas duct (behind the desulfurizer), a reheater for raising low-temperature exhaust gas in temperature is installed. The reheater exchanges heat between high-temperature water passing through the heat recovery device and low-temperature exhaust gas to raise the low-temperature exhaust gas in temperature. The water as a heat transfer medium circulates through the heat recovery device and reheater. The heat recovery device is often installed at the preceding stage of an electric dust collector. The reason is that the dust collection efficiency of an electric dust collector depends on gas temperature. And, the heat recovery device of the GGH regulates (lowers) the exhaust gas temperature and thereby can maximize the dust collection efficiency.

Here, neither a power plant in a foreign country imposing no white smoke prevention restrictions nor a CO₂-collection type coal-fired power plant provided with an apparatus for collecting and storing CO₂ in exhaust gas to suppress discharge of CO₂ is provided with a GGH.

When there is no GGH provided, it is impossible to regulate exhaust gas temperature so that the efficiency of the electric dust collector will be maximized. Therefore, a method of installing a heat recovery device at the preceding stage of the electric dust collector may be considered. However, unlike the GGH, there is no need to heat exhaust gas at the exit of the chimney, so that no reheater is mounted. Therefore, in place of the reheater, a system provided with a feed water heater may be used. The feed water heater is an apparatus of heating boiler feed water by the heat of exhaust gas recovered by the heat recovery device and thereby improving the plant efficiency.

The following embodiments relate to a coal-fired power plant and more particularly to a plant including a feed water heater for contributing to the efficiency improvement of a coal-fired power plant.

### {Embodiment 1}

Fig. 3 is a system diagram of a coal-fired power plant. A boiler 50 generates combustion gas using coal as fuel. A gas duct 54 is an exhaust gas discharge system for leading exhaust gas discharged from the boiler 50 to a chimney 58. An exhaust gas treatment equipment 57 is an apparatus of removing an environmental restriction substance included in exhaust gas discharged from the boiler 50 until below the restriction value. The chimney 58 discharges outside exhaust gas treated by the exhaust gas treatment equipment 57. Further, the exhaust gas treatment equipment 57 includes not only a heat recovery device 5 and an electric dust collector 6 but also denitrification equipment.

A steam supply system 55 includes a steam turbine 12 and a condenser 51. The steam turbine 12 is driven by steam generated by the boiler 50. The condenser 51 condenses steam discharged from the steam turbine 12 to water. The condensate discharged from the condenser 51 is returned to the boiler 50 through a water feed system 11. The water feed system 11 includes a condensate pump 52 for feeding condensate, a low-pressure feed water heater 10, and a high-pressure feed water heater 53.

Between the steam turbine 12 and the low-pressure feed water heater 10, steam extraction systems 23 and 24 through which extraction steam from the steam turbine 12 flows are installed. Drain steam pipes 25 and 26 are pipes through which drain from the feed water heater flows.

Fig. 1 is a schematic view showing the low-pressure feed water heater and the related devices among the constituent devices of the coal-fired power plant shown in Fig. 3.

The coal-fired power plant raises the condensate from the condenser 51 in pressure by the condensate pump 52 and feeds it firstly to the low-pressure feed water heater 10 through the water feed system 11. The low-pressure feed water heater 10 is composed of a plurality of heat exchangers. These heat exchangers are called a first heat exchanger 1, a second heat exchanger 2, a third heat exchanger 3, and a fourth heat exchanger 4 successively from the heat exchanger positioned on the condenser side. The feed water heated by the low-pressure feed water heater 10 is fed to the high-pressure feed water heater 53. Each heat exchanger of the low-pressure feed water heater 10 heats feed water by the steam extracted from the steam turbine 12. The steam extraction system 23 feeds extraction steam to the first heat exchanger 1 and the steam extraction system 24 feeds extraction steam to the second heat exchanger 2. The extraction pipes for feeding extraction steam to the third and fourth heat exchangers are omitted. The extraction steam fed to the second heat exchanger 2 exchanges heat with the feed water and then becomes drain. This drain is fed to the first heat exchanger 1 through the drain steam pipe 25. The first heat exchanger 1 heats feed water using drain from the second heat exchanger 2 and the extraction steam extracted from the steam extraction system 23. And, the drain discharged from the first heat exchanger 1 is fed finally to the condenser 51 through the drain steam pipe 26. Each heat exchanger of the low-pressure feed water heater 10 exchanges heat between the extraction steam from the steam turbine 12 and feed water flowing through the water feed system 11, though it does not mix the two.

The water feed system of this embodiment branches on the upstream side of the low-pressure feed water heater 10. A part of the feed water flowing through the water feed system 11 is fed to the heat recovery device 5 installed on the gas duct through a water feed bypass system 27. The heat recovery device 5 heats feed water by high-temperature exhaust gas and then feeds water again to the water feed system 11. The water feed system 11 of this embodiment permits the water feed bypass system 27 to join on the latter side of the second heat exchanger 2. However, the junction position of the water feed bypass system 27 to the water feed system 11 depends on the heat quantity that can be recovered from exhaust gas. When the recovered heat quantity from exhaust gas is large and the feed water temperature can rise to a high temperature, it may be considered that the water feed bypass system 27 joins on a more slip-stream side relative to the water feed system 11. Inversely, when the heat quantity recovered from exhaust gas is small, it may be considered that the water feed bypass system 27 joins on a more upstream side relative to the water feed system 11 (that is, at the latter stage of the first heat exchanger 1). The heat quantity recoverable from exhaust gas depends on the difference between the temperature of exhaust gas entering the heat recovery device 5 and an appropriate value of the entrance exhaust gas temperature decided on the basis of the dust collection efficiency of the electric dust collector 6 installed at the latter stage of the heat recovery device 5 and the exhaust gas flow rate.

Next, in the aforementioned apparatus, a method for executing feed water heating by exhaust gas and controlling the feed water temperature and the exhaust gas temperature at the entrance of the electric dust collector to predetermined values will be explained.

At the feed water exit of each heat exchanger composing the low-pressure feed water heater 10, a temperature sensor for detecting the feed water temperature is installed. Further, Fig. 1 shows two temperature sensor 31 and 32 representatively. Further, at the entrance of the electric dust collector, a temperature sensor 33 for detecting the entrance gas temperature of the electric dust collector is installed. Temperature signals detected by the temperature sensors 31 to 33 are transmitted to a control unit 7. The control unit 7 regulates the flow rate of extraction steam so as to control the temperatures detected by these temperature sensors to predetermined values.

A flow rate control valve 41 is a valve for regulating the extraction steam flow rate to be fed from the steam turbine 12 to the first heat exchanger 1. A flow rate control valve 42 is a valve for regulating the extraction steam flow rate to be fed to the second heat exchanger 2. A flow rate control valve 43 is a valve for regulating the water feed bypass flow rate flowed to the water feed bypass system 27. The control unit 7 transmits an opening-angle signal to the flow rate control valves 41, 42, and 43 so as to control the temperatures detected by the temperature sensors 31, 32, and 33 to the predetermined values.

Concretely, a part of the feed water fed from the condensate pump 52 is fed to the heat recovery device 5 through the water feed bypass system 27. For the gas temperature at the entrance of the electric dust collector, a value is set so as to maximize the dust collection efficiency. The control unit 7 controls the flow rate control valve 43 to regulate the water feed bypass flow rate so that the value of the temperature sensor 33 for detecting the gas temperature at the entrance of the electric dust collector will be the aforementioned set value. In the heat recovery device 5, as the water feed bypass flow rate increases, the heat exchange quantity from exhaust gas to feed water increases and the gas temperature at the entrance of the electric dust collector lowers. Inversely, as the water feed bypass flow rate decreases, the heat exchange quantity from exhaust gas to feed water decreases and the gas temperature at the entrance of the electric dust collector rises.

On the other hand, if the water feed bypass flow rate through the water feed bypass system 27 increases, the feed water flow rate flowing through the first heat exchanger 1 and the second heat exchanger 2 decreases. When the extraction steam flow rate flowing from the steam turbine 12 is not changed, the first heat exchanger 1 and the second heat exchanger 2 heat a small quantity of feed water, so that the feed water temperature rises. For the feed water temperature, an optimum value to each heat exchanger in the boiler is set. Therefore, the control unit 7 controls the flow rate control valves 41 and 42 to regulate the extraction steam flow rate so that the values of the temperature sensors 31 and 32 for detecting the feed water exit temperature of each heat exchanger will be the aforementioned set values. As the extraction steam flow rate decreases, the heat quantity fed from extraction steam to feed water decreases and the feed water temperature falls. If the extraction steam flow rate from the steam turbine decreases, steam is accordingly used for power generation, resulting in an increase in the plant efficiency.

According to this embodiment, the control unit 7 including the flow rate control valve 43 for regulating the water flow rate flowing in the water feed bypass system 27, the flow rate control valves 41 and 42 installed in the extraction pipe for extracting steam from the steam turbine 12, the temperature sensor 33 installed on the downstream side of the heat recovery device 5, and the temperature sensors 31 and 32 installed on the downstream side of the feed water heater is installed. The control unit 7 regulates the opening angles of the flow rate control valves 41 to 43 on the basis of the exhaust gas temperature detected by the temperature sensor 33 and the feed water temperature detected by the temperature sensors 31 and 32. In the coal-fired power plant, due to a deterioration with age of the boiler, the exhaust gas temperature and exhaust gas flow rate are changed. Therefore, in the heat recovery device installed in the exhaust gas system (the gas duct), the heat quantity recovered from exhaust gas is changed and the dust collection efficiency of the electric dust collector positioned on the downstream side is influenced. Further, by the extraction steam quantity from the steam turbine, the heat exchangers in the boiler are influenced. Therefore, by installing the aforementioned control unit, the dust collection efficiency of the electric dust collector is maintained and it can be suppressed that water is evaporated (steaming) by the heat exchangers in the boiler and the heat exchangers are damaged. Further, the phenomenon that the total quantity of water fed to the boiler is not evaporated and some of it is discharged as drain can be avoided.

Further, in this embodiment, the feed water heater is composed of a plurality of heat exchangers and the temperature sensors are installed on the downstream side of each heat exchanger. With the temperature sensors installed on the downstream side of each heat exchanger, the heating quantity for heating feed water by each heat exchanger using extraction steam can be confirmed. Therefore, the steam quantity extracted from each steam turbine can be regulated and the extraction steam quantity can be minimized. If the extraction steam quantity can be reduced, the generated energy of each steam turbine can be increased.

### {Embodiment 2}

Fig. 2 is a schematic view showing the low-pressure feed water heater and the related devices among the constituent devices of the coal-fired power plant. Here, only the portions different from the Embodiment 1 will be explained.

The Embodiment 1 uses one heat recovery device, though the Embodiment 2 uses a plurality of heat recovery devices. A first heat recovery device 8 is installed in parallel with the first heat exchanger 1 and a second heat recovery device 9 is installed in parallel with the second heat exchanger 2. Water feed bypass systems 28 and 29 for feeding water to the respective heat recovery devices and flow rate control valves 44 and 45 for regulating the water feed bypass flow rate are installed. The plurality of flow rate control valves are controlled by the control unit 7 and the water feed bypass flow rate to each heat recovery device is regulated independently.

The control unit 7 of this embodiment regulates the feed water flow rate to be fed to the heat recovery device positioned on the high-temperature side of the water feed system, from among the plurality of heat recovery devices, in such a way that the feed water rate will be more increased. As the water feed bypass flow rate to the heat recovery device increases, the feed water flow rate to the feed water heater (heat exchanger) installed in parallel with the heat recovery device decreases. And, the heat quantity necessary to heat feed water using extraction steam of the steam turbine decreases, so that the flow rate of the extraction steam of the steam turbine can be decreased. With respect to the contribution degree for decreasing the extraction steam flow rate and improving the turbine output, the second heat exchanger 2 is larger than the first heat exchanger 1. The reason is that the feed water temperature rises higher on the downstream side of the feed water system than on the upstream side and, as a result, with respect to the extraction steam for heating feed water, the second heat exchanger 2 positioned on the high-temperature side of the feed water system requires steam at a higher temperature and a higher pressure than the first heat exchanger 1. Therefore, by increasing the flow rate of the feed water to be fed to the heat recovery device positioned on the high-temperature side of the feed water system, it is possible to make use of high-temperature and high-pressure steam not for heating feed water but for the rotation power of the turbine and increase the range of turbine output.

In consideration of the aforementioned characteristics, in this embodiment, when decreasing the extraction steam from the steam turbine, it is possible to increase the contribution degree to the increase in the turbine output by decreasing higher-temperature and higher-pressure extraction steam preferentially.

Next, the control method of this embodiment will be explained. This embodiment is the same as the Embodiment 1 in that the water feed bypass flow rate is regulated so that the entrance gas temperature of the electric dust collector 6 in the exhaust gas treatment equipment will be the predetermined value.

In this embodiment, when increasing the water feed bypass flow rate because the entrance gas temperature of the electric dust collector 6 is higher than the predetermined value, the control unit 7, by operating the flow rate control valve 45 so that it opens, increases the water feed bypass flow rate to the second heat recovery device 9 preferentially. At this time, to prevent the exit feed water temperature of the second heat exchanger 2 from rising, the control unit 7, by controlling the flow rate control valve 42 of extraction steam so that it closes, decreases the extraction steam flow rate to the second heat exchanger 2 and regulates the exit feed water temperature to the predetermined value. Here, in the control unit 7, a lower limit value of flow rate of extraction steam to be fed to the second heat exchanger 2 is set. When the extraction steam flow rate reaches the lower limit value or when there is no lower limit value set, the control unit 7 totally closes the flow rate control valve 42. Then, when the extraction steam flow rate reaches zero, the control unit 7, while operating the flow rate control valve 44 so that it opens, increases the water feed bypass flow rate to the first heat recovery device 8. In conjunction with this operation, the extraction steam flow rate to the first heat exchanger 1 is decreased. As mentioned above, when the heat quantity recovered from exhaust gas by only the second heat recovery device 9 is insufficient and the entrance gas temperature of the electric dust collector is not reduced to the predetermined value, the first heat recovery device 8 has an assistant role of recovering heat from exhaust gas.

When decreasing the water feed bypass flow rate because the entrance gas temperature of the electric dust collector 6 is lower than the predetermined value, the reverse procedure to the aforementioned control method is used. Concretely, the control unit 7 operates the flow rate control valve 44 so that the water feed bypass flow rate to the first heat recovery device 8 will be decreased giving a priority over the second heat recovery device 9. At this time, to prevent the exit feed water temperature of the first heat exchanger 1 from decreasing, the control unit 7, by controlling the flow rate control valve 41 of extraction steam so that it opens, increases the extraction steam flow rate to the first heat exchanger 1 and regulates the exit feed water temperature to the predetermined value. Here, in the control unit 7, a lower limit value of the water feed bypass flow rate to the first heat recovery device 8 is set. When the water feed bypass flow rate reaches the lower limit value or when there is no lower limit value set, the control unit 7 totally closes the flow rate control valve 44. Then, when the water feed bypass flow rate reaches zero, the control unit 7, by operating the flow rate control valve 45 so that it closes, decreases the water feed bypass flow rate to the second heat recovery device 9. In conjunction with this operation, the control unit 7 increases the extraction steam flow rate to the second heat exchanger 2.

According to this embodiment, in the coal-fired power plant using exhaust gas heat to heat feed water, the water feed bypass flow rate of the heat exchanger positioned on the downstream side of the water feed system is increased preferentially. For this reason, by decreasing turbine extraction steam at a higher temperature and a higher pressure, it is possible to increase the range of turbine output and thereby achieve a high-efficient plant operation.

### {Industrial Applicability}

The present invention can be applied to a coal-fired power plant including a feed water heater for heating feed water by exhaust gas heat.

### {Reference Signs List}

1 First heat exchanger
2 Second heat exchanger
3 Third heat exchanger
4 Fourth heat exchanger
5 Heat recovery device
6 Electric dust collector
7 Control unit
8 First heat recovery device
9 Second heat recovery device
10 Low-pressure feed water heater
11 Water feed system
12 Steam turbine
23, 24 Steam extraction system
25, 26 Drain steam pipe
27, 28, 29 Water feed bypass system
31, 32, 33 Temperature sensor
41, 42, 43, 44 Flow rate control valve

## Claims

1. A coal-fired power plant comprising:
an exhaust gas discharge system for flowing exhaust gas discharged from a boiler flow,
a steam supply system for driving a steam turbine by steam generated by the boiler and feeding the steam to a condenser after driving the steam turbine, and
a water feed system for feeding water condensed by the condenser to the boiler, wherein:
the water feed system includes a feed water heater having a heat exchanger for heating the water by steam extracted from the steam turbine, and
a water feed bypass system is provided at an upstream side of the heat exchanger to exchange heat between the exhaust gas flowing through the exhaust gas discharge system and the water of the water feed system by a heat recovery device which is installed in the water feed bypass system, **characterized in that**:
a control unit including a first flow rate control valve for regulating a water flow rate flowing in the water feed bypass system, a second flow rate control valve installed in an extraction pipe for extracting steam from the steam turbine,
a first temperature sensor installed on a downstream side of the heat recovery device, and a second temperature sensor installed on a downstream side of the heat exchanger, wherein the control unit regulates openings of the first and second flow rate control valves on the basis of an exhaust gas temperature detected by the first temperature sensor and a feed water temperature detected by the second temperature sensor.

2. The coal-fired power plant according to Claim 1, wherein:
the feed water heater comprises a plurality of heat exchangers and
the second temperature sensor is installed on the downstream side of the respective heat exchangers.

3. The coal-fired power plant according to Claim 1, wherein:
the first flow rate control valve controls an opening thereof on the basis of an entrance gas temperature of an electric dust collector installed on the downstream side of the heat recovery device,.

4. The coal-fired power plant according to Claim 1, wherein:
the second flow rate control valve controls an opening thereof on the basis of the feed water temperature discharged from the heat exchanger.

5. The coal-fired power plant according to Claim 1, wherein
a plurality of the heat exchangers and a plurality of the heat recovery devices are arranged as a pair, a water feed bypass system for branching on the upstream side of each of the heat exchangers is provided, and
the control unit regulates a flow rate of feed water to be fed to the heat recovery device positioned on a high-temperature side of the water feed system from among the plurality of heat recovery devices so as to increase the flow rate thereof.

6. An operating method for a coal-fired power plant comprising:
an exhaust gas discharge system for flowing exhaust gas discharged from a boiler flow,
a steam supply system for driving a steam turbine by steam generated by the boiler and feeding the steam to a condenser after driving the steam turbine, and
a water feed system for feeding water condensed by the condenser to the boiler, wherein:
the water feed system includes a feed water heater having a heat exchanger for heating the water by steam extracted from the steam turbine, and
a water feed bypass system is provided at an upstream side of the heat exchanger to exchange heat between the exhaust gas flowing through the exhaust gas discharge system and the water of the water feed system by a heat recovery device which is installed in the water feed bypass system, comprising a step of:
regulating a water flow rate flowing in the water feed bypass system and an extraction rate for extracting steam from the steam turbine on the basis of a exhaust gas temperature on a downstream side of the heat recovery device and a feed water temperature on a downstream side of the heat exchanger.
